# EUROPÄISCHE PATENTSCHRIFT

(11) **EP 1 161 333 B1**
(45) Veröffentlichungstag und Bekanntmachung des Hinweises auf die Patenterteilung: **23.02.2005**
(21) Anmeldenummer: 00910832.5
(22) Anmeldetag: 15.03.2000
(51) Int. Cl.: B29C 44/04, B29C 44/34

(54) **VERFAHREN UND VORRICHTUNG ZUR HERSTELLUNG VON PHYSIKALISCH GESCHÄUMTEN SPRITZGIESSARTIKELN**
METHOD AND DEVICE FOR PRODUCING PHYSICALLY FOAMED INJECTION MOULDED PARTS
PROCEDE ET DISPOSITIF POUR LA PRODUCTION D'ARTICLES MOULES PAR INJECTION MOUSSES PHYSIQUEMENT

(30) Priorität: 15.03.1999 DE 19911378
(43) Veröffentlichungstag der Anmeldung: 12.12.2001
(73) Patentinhaber: Stieler, Ulrich, 38642 Goslar (DE)
(72) Erfinder: Stieler, Ulrich, 38642 Goslar (DE)
(74) Vertreter: Einsel, Martin
(86) Internationale Anmeldenummer: PCT/EP2000/002258
(87) Internationale Veröffentlichungsnummer: WO 2000/054952

(56) Entgegenhaltungen:
- DE-A- 19 646 665
- GB-A- 1 333 587
- US-A- 4 548 776
- US-A- 5 093 053

## Beschreibung

Die vorliegende Erfindung betrifft ein Verfahren und eine Vorrichtung zur Herstellung von physikalisch geschäumten Spritzgießartikeln, insbesondere Spritzgießartikel mit einer inneren Schaumstruktur und einer kompakten geschlossenporigen Außenhaut aus dem gleichen Material wie der Grundkörper.

Die Herstellung von zum Beispiel geschäumten Kunststoffen erfolgt mit Hilfe von sogenannten Treibstoffen, die eine plastische, i.a. thermisch erweichte Kunststoffmasse in erwünschter Weise aufblähen. Die Treibstoffe werden dabei entweder über chemische Reaktion der Komponenten in situ erzeugt (chemische Treibstoffe), oder es werden dem Ausgangsmaterial komprimierte Fluide, zum BeispielN₂, CO₂, unter Druck zugesetzt, wobei bei der anschließenden Entspannung des Komponentengemisches auf Normaldruck eine durch das Treibmittel hervorgerufene Aufschäumung der Kunststoffmasse eingetreten ist.

Chemische Treibmittel weisen jedoch eine Reihe von Nachteilen auf. So müssen für die Anwendung im Schaumspritzguss unter Umständen höhere Temperaturen gewählt werden als für die Erweichung der Ausgangsmaterialien an sich notwendig ist, um den Zündpunkt der Treibmittel zu erreichen, da im allgemeinen die Temperatur, bei der die Reaktion der Treibmittel erzeugenden Komponenten einsetzt, sehr hoch ist. Durch die hohen Temperaturen wird ein höherer Energieaufwand beim Aufschmelzen der Rohstoffe erforderlich. Zudem verlängem sich die Zyklus- beziehungsweise Kühlzeiten und eine höhere Abkühlleistung der Kühlanlagen ist notwendig. Unter Umständen kann auch eine Schädigung der Rohstoffe aufgrund der vergleichsweise hohen Temperaturen eintreten.

Nicht umgesetzte chemische Treibmittel können sich an der Oberfläche der erhaltenen Artikel befinden und zu einer Vergilbung der Artikel führen. Auch kann es zu allergischen Reaktionen mit der Haut bei Kontakt mit diesen Artikeln kommen.

Schaumstoffartikel, die mittels chemischer Treibmittel erhalten worden sind, sind nicht oder nur bedingt recyclebar, da die Gefahr besteht, dass nicht gezündete Treibmittel bei der Wiederverwertung zu unkontrollierten Reaktionen führen können.

Vorzugsweise werden daher zum Schäumen von Kunststoffen physikalische Treibmittel eingesetzt. Physikalische Treibmittel erlauben eine optimale Anpassung der Schmelztemperatur an den jeweils gewählten Rohstoff, wodurch sich der Energieaufwand verringert, optimale Zyklus- und Kühlzeiten ermöglicht werden und zudem keine Gefahr besteht, dass die Rohstoffe aufgrund zu hoher Temperaturen beeinträchtigt werden könnten. Weiter können als physikalische Treibmittel preiswerte Gase wie zum Beispiel CO₂ verwendet werden.

Physikalische Treibmittel verbleiben nicht in den fertiggestellten Schaumstoffartikeln, sondern diffundieren innerhalb vergleichsweise kurzer Zeit heraus. Somit sind diese Artikel voll recyclebar, da nicht befürchtet werden muss, dass Treibmittelrückstände zu unkontrollierten Reaktionen führen könnten.

Zur Herstellung von Artikeln aus geschäumten Kunststoff mit kompakter geschlossener Außenhaut und einem mit der Außenhaut beziehungsweise Randzone zusammenhängenden zeitigen Kern, auch Integralschaum oder Strukturschaum bezeichnet, sind verschiedene Verfahren bekannt.

So werden bei dem Reaction Injection Molding-Verfahren (RIM) zwei reaktive Komponenten miteinander vermischt, die in der Kavität einer Form unter Reaktion härten und schäumen. Aufgrund der schnelleren Abkühlung an der Formwand erstarrt die Reaktionsmasse dort schneller als im Inneren der Form, wodurch die Schäumung dort eher stockt als im Forminneren und eine kompakte dichte Außenschicht ausgebildet wird.

Verfahrensbedingt muss die reaktive Komponentenmischung vergleichsweise dünnflüssig sein, um eine vollständige Ausfüllung der Form zu gewährleisten, bevor die Reaktion einsetzt. Dies führt jedoch zu Unregelmäßigkeiten auf der Oberfläche des gebildeten Artikels aufgrund von Überpritzung und Hautbildung, die für hochwertige Artikel, für die eine perfekte Oberfläche erwünscht ist, eine aufwendige Nachbearbeitung erforderlich machen.

Zudem muss für das RIM-Verfahren die Form vor dem Einspritzen mit einem Trennmittel behandelt werden, was zum einem verfahrenstechnisch mehr Aufwand erfordert und zudem zu Rückständen auf dem fertiggestellten Artikel führen kann, die entfernt werden müssen. Von Nachteil sind auch die relativ langen Zykluszeiten.

Da die Schäumung beim RIM-Verfahren in der Regel chemisch erfolgt, sind die erhaltenden Artikel nur bedingt recyclebar.

Bevorzugt werden mit dem RIM-Verfahren Integralschaumstoffe aus Polyurethan hergestellt, die als Werkstoff vor allem in der Automobilindustrie, zum Beispiel für Lenkradummantelungen oder Schaltknaufe etc., Verwendung finden. Für diesen Anwendungsbereich müssen die Artikel aber nicht nur eine möglichst perfekte Oberfläche, sondern auch ein angenehmes Hautgefühl (Haptik) aufweisen.

Es hat sich gezeigt, dass Artikel aus PUR-Integralschaumstoff eine nur bedingt akzeptable Haptik besitzen.

Es ist auch bekannt, Integralschaumstoffe aus thermoplastischen Urethan oder thermoplastischen Elastomer mittels konventioneller Spritzgießverfahren herzustellen. Hierbei können sowohl chemische wie physikalische Treibmittel zum Einsatz kommen. Im Gegensatz zum RIM-Verfahren, das spezielle Anlagen erfordert, können hierfür bereits vorhandene Spritzgießanlagen ohne aufwendige Umrüstung eingesetzt werden.

Die erforderliche Nachbearbeitung der erhaltenen Artikel ist nur gering.

Die DE 196 46 665 A1 beschreibt ein Verfahren zum Dosieren von physikalischen Treibmitteln, wobei dem im Verbraucher, zum Beispiel einem Extruder oder einer RIM-Maschine, geförderten plastischen Kunststoffmaterial ein Treibmittel mit hohem Druck zugeführt wird, und die Menge des Treibmittels mit einem Druckregelventil geregelt wird, das die Druckdifferenz über einer starren Drossel konstant hält, indem die Druckdifferenz in Abhängigkeit vom Treibmitteldurchfluss geregelt wird. Bei den hier beschriebenen Extrusions-Verfahren handelt es sich um kontinuierliche Verfahren, bei denen das Treibmittel permanent zugesetzt wird.

Aus der DE 1 778 457 ist ein Verfahren zum Herstellen von Mehrschichtartikeln mit einem geschäumten Kern und einer ungeschäumten thermoplastischen Außenhaut bekannt, wobei zunächst eine erste treibmittelfreie Schmelze und eine zweite treibmittelhaltige Schmelze sowie ggf. eine dritte treibmittelfreie Schmelze bereitgestellt und nacheinander in eine entsprechende Form eingespritzt werden, wobei die Form bei einer Temperatur gehalten werden muss, die gleich oder größer als die Aktivierungstemperatur des Treibmittels ist.

Soweit physikalische Treibmittel eingesetzt werden, wird vorgeschlagen, entweder die Temperatur der Schmelze beim Verlassen der Düse so hoch zu wählen, dass bei Verwendung einer Form mit konstantem Innenvolumen die Gasbildung und damit die Expansion unter dem auf den Stoff in der Form ausgeübten Druck noch gebildet wird und bei Verwendung einer Form mit ausdehnbarem Inneren die Gasbildung und damit die Expansion erfolgt, in dem der auf das Forminnere ausgeübte Druck zur Ausdehnung der Form entspannt wird. Weder findet sich ein Hinweis, das Treibmittel dem Schmelzefluss, der in die Form einfließt, direkt zuzusetzen noch darauf, die Menge an Treibmittel, die dem Schmelzestrom zudosiert wird, über den Druck zu regeln.

In der DE 1 948 454 wird ein verbessertes Verfahren der vorstehenden Art genannt, wobei das Treibmittel dem Schmelzestrom kurz vor dem Eintritt in die Form injiziert wird und die Injektionsdauer so lange fortgesetzt wird, bis die für die Bildung des Kerns benötigte Gemischmenge in die Form eingetragen worden ist. Als Treibmittel werden Lösungsmittel mit einem Siedepunkt zwischen vorzugsweise 20 bis 150 °C genannt, die zur Vermeidung einer vorzeitigen Expansion unter einem entsprechenden Druck gehalten werden sollen. Ein Hinweis auf eine Druckregelung der Zusatzmenge an Treibmittel zur Schmelze findet sich auch hier nicht.

In dem US-Patent 4,548,776 ist ein Verfahren zur Herstellung von Spritzgießartikeln mit geschäumtem Kern beschrieben, wonach gasförmiges oder gas-generierendes chemisches Treibmittel der Schmelze bereits im Extruder unter erhörtem Druck zugesetzt, mit dieser innig vermischt und anschließend die bereits geschäumte Schmelze in die Form eingespritzt wird.

Die Zufuhr des Treibmittels erfolgt hierbei über einen porösen Einsatz am Injektionspunkt, wobei in der Zufuhrleitung ein Versorgungsventil vorgesehen ist. Dieses Versorgungsventil ist mit einer automatischen Kontrollvorrichtung verbunden, über die der Druck des zuzuführenden Treibmediums eingestellt wird, um eine gewünschte Schäumung zu erzielen.

Insbesondere zeigt die D1 eine Vorfüllung der Form mit treibmittelfreier Schmelze.

Es ist Aufgabe der vorliegenden Erfindung, ein Verfahren zur Herstellung von physikalisch geschäumten Spritzartikeln zur Verfügung zu stellen, mit dem auf einfache Weise präzise geschäumte Spritzartikel mit integraler Struktur erhalten werden können, die hervorragende Oberflächeneigenschaften aufweisen, so dass keine aufwendige Nachbehandlung erforderlich ist, und die zudem eine ausgezeichnete Haptik besitzen.

Die erfindungsgemäß hergestellten Artikel eignen sich insbesondere für Anwendungsbereiche, die hohe Qualitätsanforderungen an die Oberflächenbeschaffenheit stellen und für die ein angenehmes sensorisches Gefühl bei Hautkontakt von Vorteil ist. Als Beispiel sei die Automobilindustrie genannt, für die Griffe, Knäufe, wie Schaltknäufe, Lenkradummantellungen etc. aus den erfindungsgemäß erhaltenen geschäumten Kunststoffen eingesetzt werden können. Das erfindungsgemäße Verfahren ist jedoch keineswegs auf die Herstellung von Artikeln für die Automobilindustrie beschränkt, sondern eignet sich ganz allgemein zur Herstellung von beliebigen geschäumten Spritzgussartikeln.

Beispielsweise lassen sich nach diesem Verfahren auch vorteilhaft Massenartikel, wie Verschlüsse für flaschenartige Behältnisse, zum Beispiel Stöpsel oder Korken, erhalten. Weitere Beispiele sind Bälle, Kugeln, Fender, Schwimmer etc..

Ein weiteres Einsatzgebiet ist die Fertigung von tragenden Teilen für zum Beispiel die Flugzeug- oder Automobilindustrie; insbesondere für festigkeitsrelevante Teile.

Erfindungsgemäß wird diese Aufgabe durch ein Verfahren gemäß Anspruch 1 zur Herstellung von physikalisch geschäumten Spritzartikeln gelöst.

Mit diesem Verfahren lassen sich physikalisch geschäumte Spritzgießartikel erhalten, deren geschäumter Kern ganz oder teilweise von einer kompakten geschlossenen Außenhaut umgeben ist, die ohne Zusatz von Treibmitteln hergestellt worden ist, wobei der Kern und die Außenhaut aus demselben Material bestehen.

Weiter betrifft die vorliegende Erfindung eine Vorrichtung gemäß Anspruch 21 zur Durchführung des erfindungsgemäßen Verfahrens.

Diese Vorrichtung kann auch vorteilhaft zum Zudosieren von komprimierbaren Treibmitteln eingesetzt werden.

Der in der ersten Stufe zunächst in die Kavität eingeleitete treibmittelfreie Schmelzanteil bildet bei den fertiggestellten geschäumten Spritzartikeln eine kompakte geschlossene Außenhaut ohne Poren aus.

Als Treibmittel kann ein beliebiges Fluid verwendet werden, das bei entsprechender Druckentlastung expandiert und in geeigneter Weise das Schmelzematerial schäumt. So können komprimierbare Fluide, wie zum Beispiel Gase in flüssiger oder überkritischer Phase, eingesetzt werden.
Aufgrund der leichten Verfügbarkeit empfiehlt sich die Verwendung von Kohlendioxid.

Ein weiteres bevorzugtes Treibmittel ist Wasser.

Das Ausgangsmaterial für die Schmelze unterliegt keinen besonderen Beschränkungen. Es kann jedes beliebige thermoplastische Schmelzematerial eingesetzt werden, das sich zum Spritzgießen eignet und geschäumt werden kann.

Beispiele sind thermoplastische Kunststoffe, aber auch weitere thermoplastische Schmelzen wie zum Beispiel metallische oder keramische Schmelzen. Beispiel für metallische Materialien sind unter anderem Aluminium, Magnesium, Zink, Zinn oder auch Edelmetalle.

Das erfindungsgemäße Verfahren führt im Vergleich mit den entsprechenden kompakten Gegenständen zu Gewichtserleichterung und Festigkeitserhöhung.

Im Sinne der Erfindung bedeutet "druckgeregelt", dass im Verlauf des Verfahrens zum Zudosieren des Treibmittel der Druck, der auf das Treibmittel ausgeübt wird, variiert.

Hierbei ist der Druck, der auf das Treibmittel während der Treibmittetinjektionsphase ausgeübt wird, größer als der Druck, der auf das Treibmittel in den Phasen zwischen beziehungsweise vor oder nach der Zudosierung ausgeübt wird. Dies bedeutet zum Beispiel im Fall von kritischen beziehungsweise komprimierbaren Treibmitteln, dass der in den Zwischenzykluszeiten ausgeübte Druck kleiner ist als der Haltedruck eines Druckminderbegrenzungsventils beziehungsweise Überströmventils.

Erfindungsgemäß wird somit einer zu schäumenden Schmelze der erforderliche Anteil an Treibmittel zu einer definierten Zeit über einen definierten Zeitraum unter einen definierten Druck zugesetzt.
Die Höhe des Druckes, der auf das Treibmittel während des Zudosierens ausgeübt wird, bestimmt sich insbesondere in Abhängigkeit der erforderlichen Menge an Treibmittel, der Art des herzustellenden Artikels sowie der gewählten Prozessparameter.

Dadurch daß erfindungsgemäß des Treibmittel der Schmelze innerhalb des Werkzeugs zugesetzt wird, kann der Weg, den die treibmittelhaltige. Schmelze zurücklegen muss, kurz gehalten werden.

Im Folgenden wird die vorliegende Erfindung unter Bezugnahme auf die Figuren anhand einer bevorzugten Ausführungsform am Beispiel des Zusatzes eines komprimierbaren Fluids näher erläutert. Es versteht sich, dass die nachstehende Erläuterung auch auf nicht-komprimierbare Fluide, wie zum Beispiel Wasser, prinzipiell übertragbar ist.

Es zeigen
- **Figuren 1a - 1d**: die einzelnen Stufen des erfindungsgemäßen Verfahrens zur Herstellung von physikalisch geschäumten Spritzartikeln;
- **Figur 2**: schematisch eine Vorrichtung zur Durchführung des erfindungsgemäßen Verfahrens;
- **Figur 3**: im Diagramm den Druckverlauf während der Durchführung des Verfahrens;
- **Figur 4**: eine Variante von Figur 1 mit direkter Treibmitteleinleitung in die Kavität.

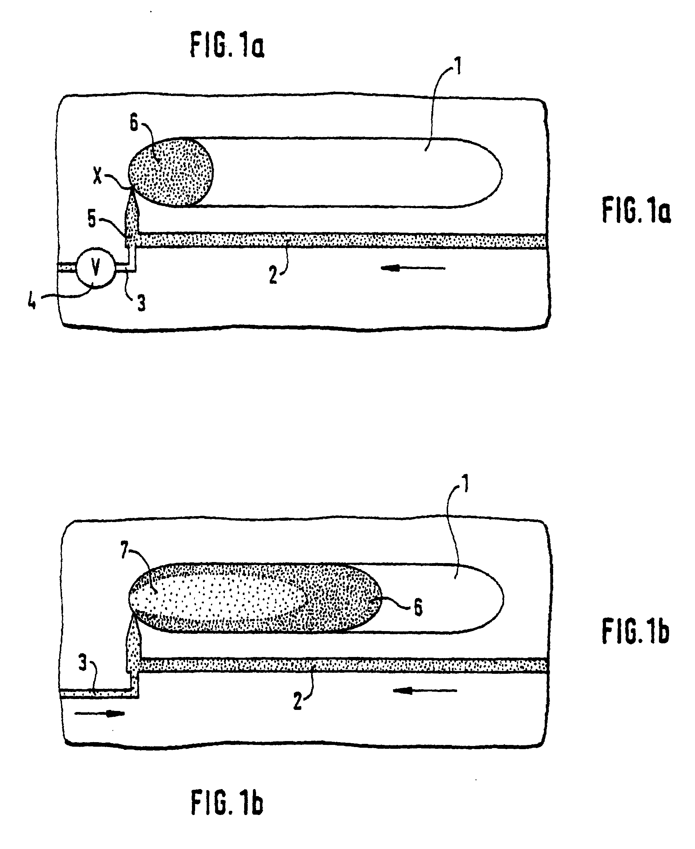

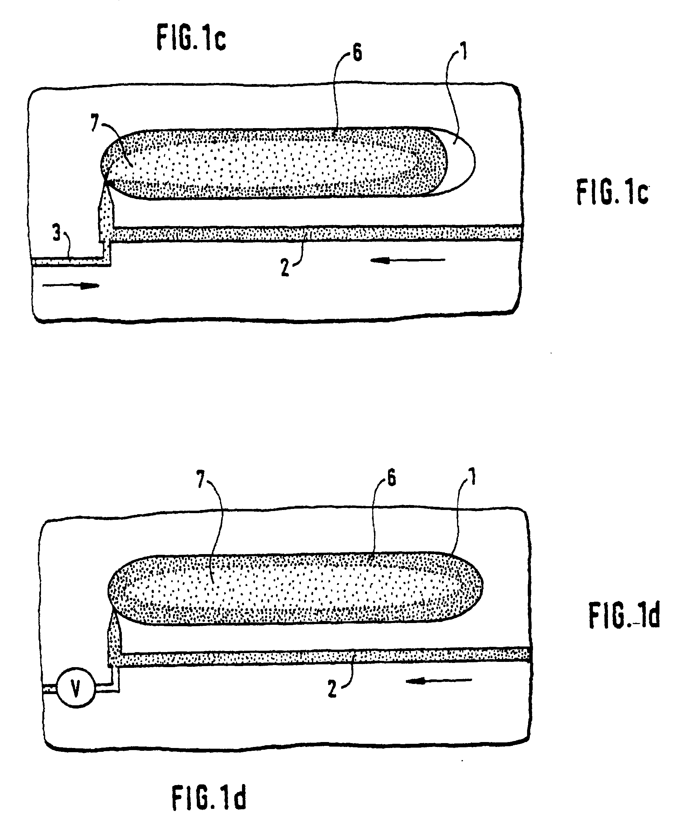

Wie in **Figur 1a** gezeigt, wird die Kavität 1 einer beliebigen Spritzgussanlage in einer ersten Stufe zunächst mit kompakter treibmittelfreier Schmelze 6 teilweise vorgefültt. Dabei ist die Zuleitung 3 für ein komprimiertes Treibmittel beispielsweise durch ein Ventil 4, wie einem Druckminderbegrenzungsventil (Überströmventil), verschlossen.

Nach Füllung der Kavität 1 mit einer gewünschten Menge an treibmittelfreier Schmelze 6 wird die Zuleitung 3 für das Treibmittel geöffnet und das Treibmittel im komprimierten, vorzugsweise flüssigen Zustand über den Injektionspunkt 5 eingespritzt. Durch Kontakt mit der heißen Schmelze wird das flüssige Treibmittel zu Gas und expandiert unter dem geringeren Druck in der Kavität.

Am Injektionspunkt 5 selbst ist das Treibmittel im Regelfall noch flüssig und nicht gasförmig, so dass man nicht im engeren Sinne von einem "Eingasungspunkt" sprechen kann.

Die Mischung 7 aus gasförmigen Treibmittel und Schmelze fließt in die Kavität 1 und bewirkt die vollständige Ausfüllung der Kavität 1, wobei der treibmittelfreie Schmelzeanteil 6, der zur Vorfüllung verwendet wurde, im Bereich der Kavitätwandung zu liegen kommt und die Außenhaut oder Randzone des zu formenden Spritzärtikels ausbildet.

Die Kavität 1 kann je nach Wunsch und Bedarf bis zur maximalen Füllmenge mit treibmittelversetzter Schmelze fertig aufgefüllt werden oder wie in **Figur 1d** gezeigt, kann der Kavität in einer dritten Stufe wiederum treibmittelfreie Schmelze zugeführt werden. In diesem Fall wird ein geschäumter Artikel erhalten, der ringsum eine kompakte feste Außenhaut aufzeigt, die durch treibmittelfreie Schmelze gebildet wird.

Nach der Schäumung und Aushärtung wird der fertige Spritzartikel, zum Beispiel aus Integralschaumstoff, aus der Kavität entfernt und die Kavität steht sofort wieder für die nächste Füllung zur Verfügung.

Wie in Figur 1d gezeigt, werden mit dem erfindungsgemäßen Verfahren Spntzartikel erhalten, die einen zelligen geschäumten Innenkem und eine kompakte feste geschlossene Außenhaut aufweisen.

Durch die Vorfüllung mit treibmittelfreier Schmelze wird die Ausbildung einer einheitlichen geschlossenen kompakten Außenhaut bewirkt und können Artikel mit ausgezeichneten Oberflächeneigenschaften erhalten werden.

Für die Durchführung des Verfahrens ist es wesentlich, das vorzeitige Expandieren des unter Druck gehaltenen Treibmittels zu verhindern. Dies kann durch entsprechende Isolierung der Vorrichtung und/oder durch Aufrechterhalten eines geeigneten Druckniveaus erfolgen.

Für das erfindungsgemäße Verfahren erfolgt die Zudosierung des Treibmittels zeit- und druckgesteuert. Die Regelung kann über eine Vorrichtung durchgeführt werden, die ebenfalls Gegenstand der Erfindung ist.

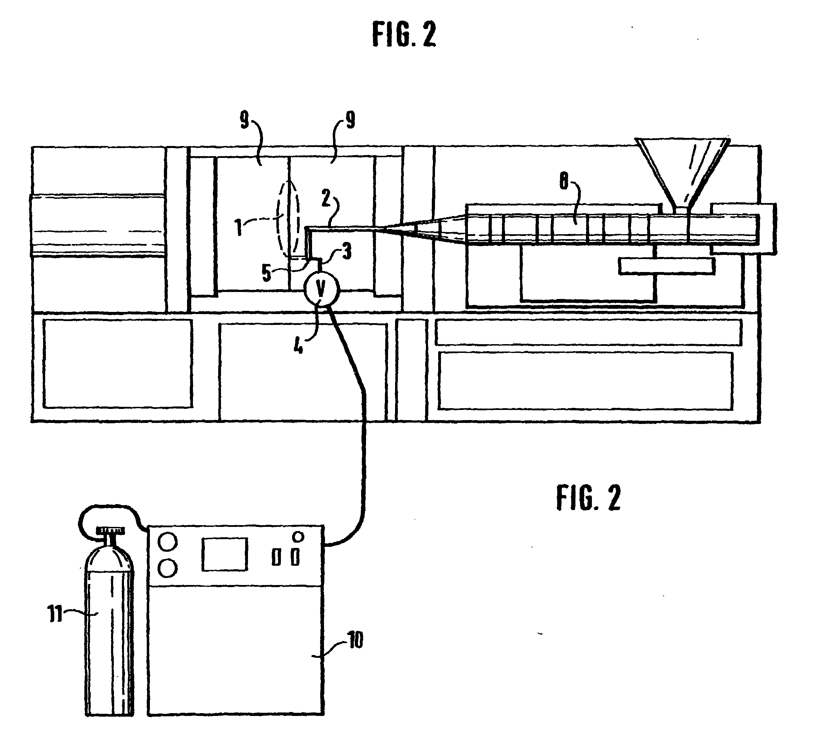

Dabei wird das - wie in **Figur 2** gezeigt - in einem Speicher 11, zum Beispiel einer Druckflasche etc., unter Druck gelagerte Treibmittel einem Druckregelventil 10 zugeführt, das ein Mehrwegeventil wie ein 3/3- oder 2/3-Wegeproportionalventil sein kann, und das vorteilhafterweise eine sehr schnelle Reaktionszeit und genaue Regelung aufweisen sollte.

Während der Treibmittelinjektionsphase, das heißt der Phase, in der der Schmelze das Treibmittel zugesetzt wird, gelangt im Fall von kritischen Treibmitteln das verdichtete Treibmittel über ein Druckminderbegrenzungsventil 4 zu dem Injektionspunkt 5 und wird dort der Schmelze zugesetzt.

Die Rohrleitungen, Verbindungsstücke, sowie die Teile der Regelungstechnik der Vorrichtung sind dabei so dimensioniert, dass keine vorzeitige Volumenerweiterung des unter Druck stehenden Treibmittels möglich ist.

Bei einer plötzlichen Volumenvergrößerung kann sich der Aggregatzustand des Mittels ändern, das heißt das Mittel wandelt sich in Gas, wobei Verdampfungskälte erzeugt wird, die wiederum die Rohrleitungen durch "Vereisen" blockieren würde.

Auch eine Temperaturerhöhung auf dem Weg zum Injektionspunkt 5 würde zu einer Änderung des Aggregatzustandes führen. Zur Vermeidung ist eine Isolierung der wärmeführenden Elementen empfehlenswert.

Zur Vermeidung einer vorzeitigen Expansion sollten sämtliche Zuleitungen sokurz wie möglich sein. Daher wird das Druckregelventil 10 vorzugsweise so nahe wie möglich an dem injektionspunkt 5 gebaut. Durch die dadurch verkürzte Zuleitung zum Injektionspunkt 5, wird auch eine Verbesserung der Regelcharakteristik des Regelventils erzielt.

Werden kritische Treibmittel eingesetzt, wird vor dem Injektionspunkt 5 ein Druckminderbegrenzungsventil beziehungsweise Überströmventil 4 vorgesehen, das dafür sorgt, dass der Druck in der Vorrichtung nicht unter einen bestimmten Wert, vorzugsweise p (krit) bei der gegebenen Temperatur, fällt, bei dem eine Wandlung des Treibmittels in Gas stattfinden würde. Wird zum Beispiel Kohlensäure als Treibmittel verwendet, ist ein Druck von mindestens 60 bar bei Raumtemperatur einzuhalten, um die Kohlensäure in der Vorrichtung stromaufwärts im flüssigen Zustand zu halten.

Durch das Druckminderbegrenzungsventil 4 wird sichergestellt, dass auch in Stillstandszeiten der Maschine, zum Beispiel in den Zwischenzykluszeiten vor und nach beziehungsweise zwischen den Treibmittelinjektionsphasen, das Treibmittel im komprimierten Zustand verbleibt. Eine völlige Druckentlastung erfolgt nur bei Abschalten der Maschine beziehungsweise der Regeltechnik. Es können auch mehrere Druckminderbegrenzungsventile mit "fallenden" Druckwerten vorgesehen sein, so dass sich in der Zuleitungsstrecke zwischen Druckregelventil 10 und dem Druckminderbegrenzungsventil 4 vor dem Injektionspunkt 5 ein Druckgradient ausbildet.

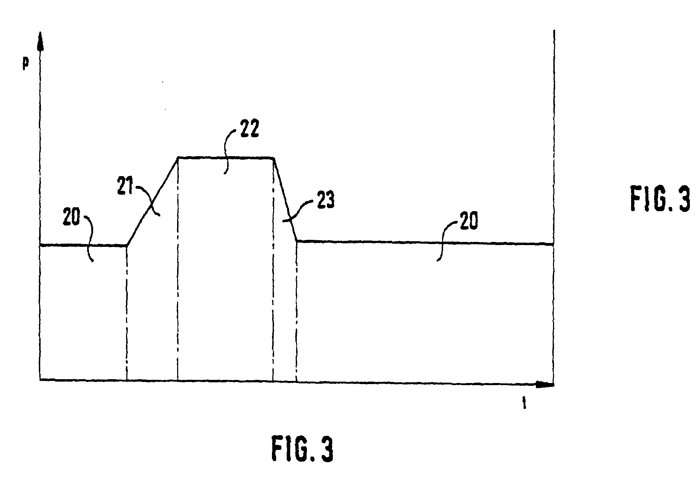

In dem in **Figur 3** gezeigten Diagramm ist der Druckverlauf zur Durchführung des erfindungsgemäßen Verfahrens beispielhaft anhand komprimierbarer Treibmittel schematisch gezeigt.

Außerhalb der Treibmittelinjektionsphase, wie in den Zwischenzykluszeiten, ist es ausreichend, die Vorrichtung unter einem gewählten Druck zu hatten, bei dem das jeweils eingesetzte Treibmittel im komprimierten, vorzugsweise flüssigen Zustand verbleibt (Abschnitt 20).

Während der Treibmittelinjektionsphase (Abschnitt 22) wird in den Zuleitungen durch das Druckregelventil 10 ein erhöhter Druck eingeleitet, so dass der Öffnungspunkt (Haltedruck) des Minderbegrenzungsventils 4 überschritten wird, und sich das Zuleitungsstück 3 bis zum Injektionspunkt 5 schnell mit flüssigem Medium füllt.

Die Druckerhöhung ist dabei proportional zur gewünschten Menge an Treibmittel, die der Schmelze zugeführt werden soll. Nach Ablauf einer Zeit t, sobald der Schmelze die gewünschte Menge an Treibmittel zugesetzt worden ist, wird der Druck wieder auf den Ausgangsdruck (Abschnitt 24) erniedrigt.

In der Figur 3 zeigen die Abschnitte 21 und 23 die Druckaufbau- beziehungsweise Abbauphase.

Der Injektionspunkt 5 ist als Drossel ausgestaltet, beispielsweise als definierter Spalt in einem Injektor, ein Sintermetallinjektor oder ein Nadelverschlussventil. Erfindungsgemäß befindet sich am Injektionspunkt ein geregelter Verschlussmechanismus. Durch die schnelle Druckerhöhung und den Widerstand durch den injektor wird verhindert, dass eine Umwandlung des Treibmittel in Gas stattfindet, während das Mittel vom Druckregelventil 10 nachströmt.

Durch die vorstehenden Maßnahmen wird sichergestellt, dass die Umwandlung des Mittels in Gas erst beim Austritt aus dem Injektor und in Kontakt mit der heißen Schmelze auftritt, und die einströmende Schmelze geschäumt wird.

Wird ein Druckminderbegrenzungsventil vorgesehen, kann auf den geregelten Verschlussmechanismus verzichtet werden.

Nach Beendigung der Treibmittelinjektionsphase, das heißt nachdem die erwünschte Menge Treibmittel der Schmelze zugesetzt worden ist, wird der Druck in der Zuleitung zum Injektionspunkt 5 wieder entlastet, so dass kein Treibmittel mehr nachströmt. In der Leitung bis zum Druckminderbegrenzungsventil 4 bleibt jedoch der Ausgangsdruck erhalten, um das Mittel für den nächsten Zyklus im komprimierten oder flüssigen Zustand zu hatten. Lediglich in dem kleinen Zuleitungsstück vom Druckminderbegrenzungsventil 4 bis zum Injektionspünkt 5 herrscht bis zum nächsten Zyklus ein nahezu druckloser und damit gasförmiger Zustand.

Es versteht sich, dass auch dieser Teil der Anlage bei Bedarf durch Vorsehen eines geeigneten Verschlussmechanismusses unter Druck gehalten werden kann, der zu Beginn der Treibmittelinjektionsphase aufgrund des ansteigenden Druckniveaus wieder öffnet.

Die Drucksteuerung über das Druckregelventil kann automatisch erfolgen, indem zum Beispiel vor und hinter dem Druckregelventil Druckmessstellen 12, 13 vorgesehen werden.

Wird beispielsweise Kohlendioxid als Treibmittel verwendet, wird die Anlage vorzugsweise bei einem Betriebsdruck von mindestens 60 bar bei Raumtemperatur gehalten, so dass das CO₂ auch während den Zeiten zwischen den Treibmittelinjektionsphasen im komprimierten flüssigen Zustand verbleibt. Zu Beginn der Treibmittelinjektionsphase wird ein erwünschter Arbeitsdruck von beispielsweise etwa 200 bar aufgebaut (Abschnitt 21), um einen ausreichenden Zufluss von Treibmittel zur Schmelze zu gewährleisten. Nach Beendigung der Treibmittelinjektionsphase 22 wird der Druck wieder auf den gewünschten Betriebsdruck abgebaut.

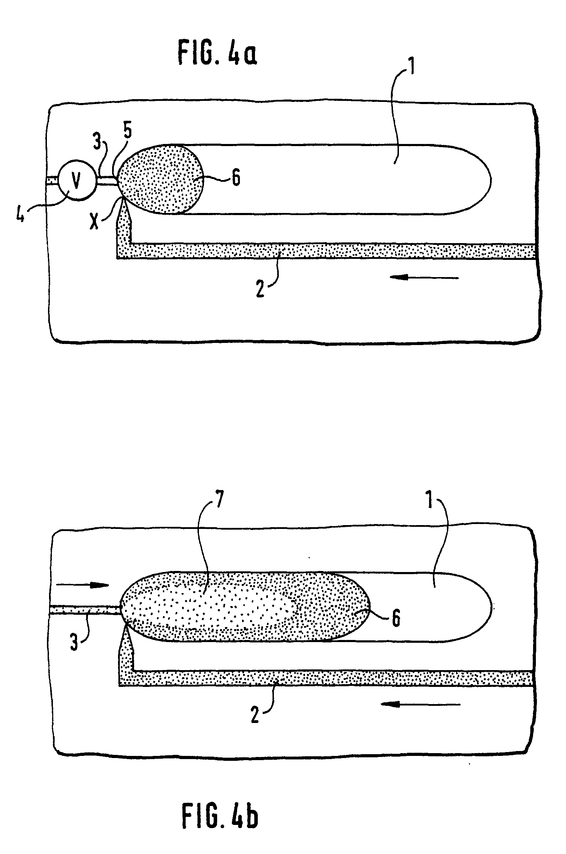

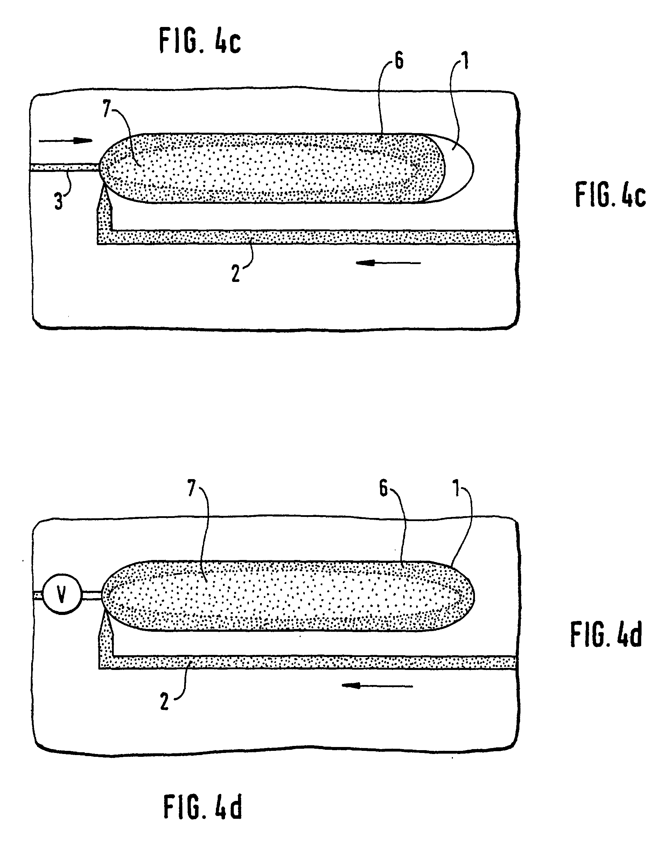

Der Injektionspunkt 5 befindet sich vorzugsweise in der Angussleitung 3 nahe des Anspritzpunktes x. Gemäß einer weiteren Ausführungsform, wie in **Figur 4** gezeigt ist, kann das Treibmittel der Schmelze in der Kavität direkt zugeführt werden. In diesem Fall befindet sich der Injektionspunkt 5 direkt an der Kavität.

Weiter kann der Aufbau eines Gegendrucks in der Kavität 1 vorgesehen sein, wie er auch bei herkömmlichen Spritzgussverfahren im sogenannten Gasgegendruckverfahren eingesetzt wird.

Mit dem erfindungsgemäßen Verfahren lassen sich sehr kurze Zykluszeiten erhalten. Somit ist das erfindungsgemäße Verfahren auch bestens geeignet zur Herstellung von Massenartikeln. Die kurzen Zykluszeiten werden unterstützt durch die sich bei der Umwandlung des Treibmittels in Gas ergebende Verdampfungskälte; die zu einer Verkürzung der Kühlzeit und damit auch der Zykluszeit führt.

Sollten sich nach der Entformung in der Porenstruktur im Kern des Artikels noch Treibmittelreste befinden, diffundieren diese langsam aus dem Artikel aus, ohne dessen Gebrauchsfähigkeit beziehungsweise Recycelfähigkeit zu beeinträchtigen.

Durch die geschlossene feste Außenhaut des Artikels erhält dieser eine ausgezeichnete Formstabilität. Zudem können mit dem erfindungsgemäßen Verfahren geschäumte Spritzartikel erhalten werden, die eine homogene gleichförmige Außenhaut aufweisen und eine ausgezeichnete Haptik besitzen.

Die erhaltenen geschäumten Spritzartikel zeigen eine hervorragende Oberflächenqualität und erfordern keine weitere Nachbehandlung. Von Vorteil ist auch, dass die Kavität nicht mit einem Trennmittel behandelt werden muss.

Das erfindungsgemäße Verfahren zum druckgesteuerten Zudosieren von physikalischen Treibmitteln zu einer schäumbaren Schmelze kann vorteilhaft mit einer Vorrichtung ausgeführt werden, umfassend einen Speicher 11, in dem das Treibmittel unter Druck gespeichert wird, ein Druckregelventil 10 zur Regelung des Treibmitteldrucks, und einen Injektionspunkt 5, der vorzugsweise als Drossel ausgestaltet ist, an dem das unter Druck stehende Treibmittel der Schmelze zugeführt wird, wobei der Injektionspunkt 5 einen geregelten Verschlussmechanismus umfasst, und im Fall von kritischen Treibmitteln mindestens ein Druckminderbegrenzungsventil 4 vorgesehen ist, das stromabwärts zum Druckregelventil 10 positioniert ist,

Obwohl die vorstehend beschriebene Vorrichtung zum druckgesteuerten Zudosieren von Treibmitteln unter hohem Druck vorteilhaft zur Herstellung von physikalisch geschäumten Spritzgießartikeln eingesetzt werden kann, eignet sie sich selbstverständlich auch für andere Verfahren, bei denen Treibmittel unter hohem Druck zu schäumenden Schmelzen zugesetzt werden.

### Bezugszeichenliste

- 1: Kavität
- 2: Schmelzezufuhr
- 3: Treibmittelzuleitung
- 4: Druckminderbegrenzungsventil
- 5: Injektionspunkt
- 6: Treibmittelfreie Schmelze
- 7: mit Treibmittel versetzte Schmelze
- 8: Kunststoffeinspritzung
- 9: Werkzeug bestehend aus zwei Hälften
- 10: Druckregelventil
- 11: Treibmittelspeicher

- X: Einspritzpunkt

- Abschnitt 20: Druck während der Zwischenzykluszeiten
- Abschnitt 21: Druckaufbauphase
- Abschnitt 22: Treibmittelinjektionsphase
- Abschnitt 23: Druckabbauphase

## Patentansprüche

1. Verfahren zur Herstellung von physikalisch geschäumten Spritzgießartikeln in einem Werkzeug (9) mit einer Kavität (1),
wobei in einer ersten Stufe ein treibmittelfreier erster Schmelzeanteil (6) in die Kavität (1) eingeleitet wird (Vorfüllung),
in einer zweiten Stufe dem nachfließenden Schmelzeanteil ein physikalisches Treibmittel unter erhöhtem Druck zugesetzt wird (Treibmittelinjektionsphase), und
ggf. in einer dritten Stufe ein treibmittelfreier weiterer Schmelzeanteil in die Kavität (1) gefüllt wird, wobei die Herstellung der Spritzgießartikel in der Kavität (1) erfolgt,
wobei die Dosierung des physikalischen Treibmittels in der zweiten Stufe druckgeregelt erfolgt, wobei der Druck, der auf das Treibmittel während der Treibmittelinjektionsphase ausgeübt wird, größer ist als der Druck, der auf das Treibmittel in den Phasen zwischen beziehungsweise vor oder nach der Zudosierung ausgeübt wird,
wobei das physikalische Treibmittel der Schmelze innerhalb des Werkzeugs (9) zugesetzt wird, und
die Expansion des Treibmittels in der Kavität (1) erfolgt.

2. Verfahren nach Anspruch 1,
**dadurch gekennzeichnet,**
**dass** das Treibmittel einer komprimierbares Fluid ist.

3. Verfahren nach einem der Ansprüche 1 oder 2,
**dadurch gekennzeichnet,**
**dass** das Treibmittel in den Zwischenzykluszeiten vor und nach der Treibmittelinjektionsphase unter Druck gehalten oder in einem komprimierten Zustand vorliegt.

4. Verfahren nach Anspruch 3,
**dadurch gekennzeichnet,**
**dass** das Treibmittel in den Zwischenzykluszeiten bei einem Druck von mindestens p (krit) des Treibmittels bei der gegebenen Temperatur gehalten wird.

5. Verfahren nach einem der vorhergehenden Ansprüche,
**dadurch gekennzeichnet,**
**dass** der Druck, der auf das Treibmittel ausgeübt wird, über ein Druckregelventil (10) gesteuert wird.

6. Verfahren nach Anspruch 5,
**dadurch gekennzeichnet,**
**dass** das Druckregelventil (10) ein Mehrwegeventil ist.

7. Verfahren nach Anspruch 6,
**dadurch gekennzeichnet,**
**dass** als Mehrwegeventil ein 3/3-Wege-Proportionalventil oder ein 2/3-Wege-Proportionalventil verwendet wird.

8. Verfahren nach einem der vorhergehenden Ansprüche,
**dadurch gekennzeichnet,**
**dass** die Drucksteuerung bei kritischen Treibmitteln zusätzlich über mindestens ein Druckminderbegrenzungsventil (4) erfolgt, das dem Druckregelventil (10) nachgeschaltet ist.

9. Verfahren nach Anspruch 8,
**dadurch gekennzeichnet,**
**dass** der Haltedruck von mindestens einem der Druckminderbegrenzungsventile (4) gleich oder höher als der Druck ist, bei dem ein kritisches Treibmittel in den Zwischenzykluszeiten gehalten wird.

10. Verfahren nach einem der vorhergehenden Ansprüche,
**dadurch gekennzeichnet,**
**dass** der durch das Druckregelventil (10) vorgegebene Druck über ein oder mehrere Druckminderbegrenzungsventile (4) auf den Einspritzdruck geregelt wird, bei dem das Treibmittel der Schmelze über einen Injektionspunkt (5) zugesetzt wird.

11. Verfahren nach einem der vorhergehenden Ansprüche,
**dadurch gekennzeichnet,**
**dass** der Injektionspunkt (5) als Drossel ausgestattet ist.

12. Verfahren nach Anspruch 11,
**dadurch gekennzeichnet,**
**dass** der Injektionspunkt (5) als definierter Spalt in einem Injektor oder ein Injektor mit einem Sintermetall ist.

13. Verfahren nach einem der Ansprüche 11 oder 12,
**dadurch gekennzeichnet,**
**dass** der Injektionspunkt (5) als geregelter Verschlussmechanismus ausgestaltet ist.

14. Verfahren nach Anspruch 1 oder einem der vorhergehenden Ansprüche 3 bis 13,
**dadurch gekennzeichnet,**
**dass** als Treibmittel Wasser eingesetzt wird.

15. Verfahren nach einem der Ansprüche 1 bis 13,
**dadurch gekennzeichnet,**
**dass** als Treibmittel ein Gas, oder Gasgemisch eingesetzt wird.

16. Verfahren nach Anspruch 15,
**dadurch gekennzeichnet,**
**dass** als Treibmittel Kohlendioxid eingesetzt wird.

17. Verfahren nach Anspruch 16,
**dadurch gekennzeichnet,**
**dass** das Kohlendioxid in den ZWischenzykluszeiten bei einem Druck von mindestens 60 bar gehalten wird (= p (krit) CO₂ bei Raumtemperatur).

18. Verfahren nach einem der vorhergehenden Ansprüche,
**dadurch gekennzeichnet,**
**dass** das Treibmittel für die Treibmittelinjektionsphase über das Druckregelventil (10) auf einen Druck über 60 bar gebracht wird.

19. Verfahren nach einem der vorhergehenden Ansprüche,
**dadurch gekennzeichnet,**
**dass** in der Kavität (1) ein Gegendruck erzeugt wird.

20. Verfahren nach einem der vorhergehenden Ansprüche,
**dadurch gekennzeichnet,**
**dass** der physikalisch geschäumte Spritzgießartikel ausgewählt ist unter einem Griff, einem Knauf, einem Schaltknauf, einer Lenkradummantelung, einem Ball, einer Kugel, einem Fender, einem Schwimmer und einem Verschluss für flaschenartige Behältnisse.

21. Vorrichtung zum druckgeregelten Dosieren von physikalischen Treibmitteln zu einer schäumbaren Schmelze, zur Durchführung eines Verfahrens nach einem der Ansprüche 1 bis 20, wobei die Vorrichtung einen Speicher (11) umfasst, in dem das Treibmittel unter Druck gespeichert wird, sowie ein Druckregelventil (10) zur Regelung des Treibmitteldrucks, und einen Injektionspunkt (5), der als Drossel ausgestaltet ist, an dem das unter Druck stehende Treibmittel der Schmelze zugeführt wird,
wobei vor dem Injektionspunkt (5) ein Druckminderbegrenzungsventil (4) vorgesehen ist und/oder der Injektionspunkt (5) als geregelter Verschlussmechanismus ausgestaltet ist.

## Claims

1. Process for the production of physically foamed injection moulded articles, by means of a cavity (1)
wherein in a first stage a propellant-free first melt portion (6) is fed into the cavity (1) (initial filling),
in a second stage a physical propellant is added at elevated pressure to the following melt portion (propellant injection phase), and
possibly in a third stage a propellant-free further melt portion is charged into the cavity (1), the production of the injection moulded articles occurring in the cavity,
wherein the metering of the physical propellant in the second stage occurs in a pressure regulated manner,
wherein the pressure which is exerted on the propellant during the propellant injection phase is greater than the pressure which is exerted on the propellant in the phases between or before or after metered addition,
wherein the physical propellant of the melt is added within the mould (9), and
the expansion of the propellant occurs in the cavity (1).

2. Process according to Claim 1, **characterised in that** the propellant is a compressible fluid.

3. Process according to Claim 1 or 2, **characterised in that** the propellant is kept under pressure in the intermediate cycle times before and after the propellant injection phase, or is present in a compressed state.

4. Process according to Claim 3, **characterised in that** in the intermediate cycle times the propellant is held a pressure of at least p (crit) of the propellant at the given temperature.

5. Process according to one of the preceding claims, **characterised in that** the pressure exerted on the propellant is controlled via a pressure control valve (10) .

6. Process according to Claim 5, **characterised in that** the pressure control valve (10) is a multi-way valve.

7. Process according to Claim 6, **characterised in that** a 3/3-way proportional valve or a 2/3-way proportional valve is used as multi-way valve.

8. Process according to one of the preceding claims, **characterised in that** the pressure control in the case of critical propellants additionally occurs via at least one pressure relief valve (4) which is connected downstream of the pressure control valve (10).

9. Process according to Claim 8, **characterised in that** the holding pressure of at least one of the pressure relief valves (4) is equal to or higher than the pressure at which a critical propellant is held in the intermediate cycle times.

10. Process according to one of the preceding claims, **characterised in that** the pressure preset by the pressure control valve (10) is regulated via one or more pressure relief valves (4) to the injection pressure at which the propellant is added to the melt via an injection point (5) .

11. Process according to one of the preceding claims, **characterised in that** the injection point (5) is configured as a throttle means.

12. Process according to Claim 11, **characterised in that** the injection point (5) is in the form of a defined gap in an injector or of an injector with a sinter metal.

13. Process according to one of Claims 11 or 12, **characterised in that** the injection point (5) is configured as a controlled closure mechanism.

14. Process according to Claim 1 or one of the preceding Claims 3 to 13, **characterised in that** water is used as propellant.

15. Process according to one of the preceding Claims 1 to 13, **characterised in that** a gas or gas mixture is used as propellant.

16. Process according to Claims 15, **characterised in that** carbon dioxide is used as propellant.

17. Process according to Claims 16, **characterised in that** the carbon dioxide is held in the intermediate cycle times at a pressure of at least 60 bar (= p (crit) CO₂ at room temperature).

18. Process according to one of the preceding claims, **characterised in that** for the propellant injection phase the propellant is brought to a pressure of over 60 bar via the pressure control valve (10).

19. Process according to one of the preceding claims, **characterised in that** a counterpressure is generated in the cavity (1).

20. Process according to one of the preceding claims, **characterised in that** the physically foamed injection moulded article is selected from a handle, a knob, a gearshift knob, a steering wheel casing, a ball, a sphere, a fender, a float and a closing means for bottle-like containers.

21. Device for the metered addition of physical propellants to a foamable melt, for undertaking a process according to one of claims 1 to 20, wherein the device comprises a storage means (11), in which the propellant is stored under pressure, and a pressure control valve (10) for regulating the propellant pressure, and an injection point (5), which is configured as a throttle means, at which the propellant under pressure is fed to the melt, wherein before the injection point (5) there is provided a pressure reduction limiting valve (4) and/or the injection point (5) is configured as a controlled closure mechanism.

## Revendications

1. Procédé pour la réalisation d'articles moulés par injection sur la base d'un moussage physique dans un outil (9) avec une cavité (1),
dans lequel, lors d'un premier palier, une première quote-part de masse en fusion (6) exempte de fluide moteur est introduite dans la cavité (1) (remplissage préliminaire), lors d'un deuxième palier, un fluide moteur physique est ajouté sous une pression plus élevée à la quote-part de masse en fusion s'écoulant à la suite (phase d'injection de fluide moteur) et, éventuellement lors d'un troisième palier, une quote-part supplémentaire de masse en fusion exempte de fluide moteur est introduite dans la cavité (1), la réalisation des articles moulés par injection ayant lieu dans la cavité (1), dans lequel le dosage du fluide moteur physique a lieu lors du deuxième palier avec une régulation de la pression, la pression exercée sur le fluide moteur pendant la phase d'injection de fluide moteur étant plus élevée que la pression exercée sur le fluide moteur pendant les phases entre le dosage d'apport ou avant ou après celui-ci et dans lequel le fluide moteur physique est ajouté à la masse en fusion à l'intérieur de l'outil (9) et l'expansion du fluide moteur a lieu dans la cavité (1).

2. Procédé selon la revendication 1, **caractérisé en ce que** le fluide moteur est un fluide pouvant être comprimé.

3. Procédé selon l'une quelconque des revendications 1 ou 2, **caractérisé en ce que**, pendant les temps de cycles intermédiaires avant et après la phase d'injection du fluide moteur, le fluide moteur est maintenu sous pression ou est disponible dans un état comprimé.

4. Procédé selon la revendication 3, **caractérisé en ce que**, pendant les temps de cycles intermédiaires, le fluide moteur est maintenu à une pression d'au moins p (critique) du fluide moteur à la température donnée.

5. Procédé selon l'une quelconque des revendications précédentes, **caractérisé en ce que** la pression qui est exercée sur le fluide moteur est commandée par l'intermédiaire d'une vanne de régulation de pression (10).

6. Procédé selon la revendication 5, **caractérisé en ce que** la vanne de régulation de pression (10) est une vanne à plusieurs voies.

7. Procédé selon la revendication 6, **caractérisé en ce que** la vanne à plusieurs voies est une vanne proportionnelle à 3/3 voies ou une vanne proportionnelle à 2/3 voies.

8. Procédé selon l'une quelconque des revendications précédentes, **caractérisé en ce que**, dans le cas de fluides moteurs critiques, la commande de la pression a lieu en supplément par l'intermédiaire d'au moins une vanne de détente de limitation de pression (4) qui est placée en aval de la vanne de régulation de pression (10).

9. Procédé selon la revendication 8, **caractérisé en ce que** la pression de maintien d'au moins une des vannes de détente de limitation de pression (4) est égale ou supérieure à la pression sous laquelle un fluide moteur critique est maintenu lors des temps de cycles intermédiaires.

10. Procédé selon l'une quelconque des revendications précédentes, **caractérisé en ce que** la pression imposée par la vanne de régulation de pression (10) est régulée par l'intermédiaire d'une ou de plusieurs vanne(s) de détente de limitation de pression (4) à la pression d'injection avec laquelle le fluide moteur est rajouté à la masse en fusion par l'intermédiaire d'un point d'injection (5).

11. Procédé selon l'une quelconque des revendications précédentes, **caractérisé en ce que** le point d'injection (5) est configuré comme élément d'étranglement.

12. Procédé selon la revendication 11, **caractérisé en ce que** le point d'injection (5) est une fente définie dans un injecteur ou un injecteur comprenant un métal fritté.

13. Procédé selon l'une quelconque des revendications 11 ou 12, **caractérisé en ce que** le point d'injection (5) est configuré comme mécanisme de fermeture régulé.

14. Procédé selon la revendication 1 ou l'une quelconque des revendications précédentes 3 à 13, **caractérisé en ce que** de l'eau est utilisée comme fluide moteur.

15. Procédé selon l'une quelconque des revendications 1 à 13, **caractérisé en ce que** du gaz ou un mélange de gaz est utilisé comme fluide moteur.

16. Procédé selon la revendication 15 **caractérisé en ce que** du dioxyde de carbone est utilisé comme fluide moteur.

17. Procédé selon la revendication 16, **caractérisé en ce que**, lors des temps de cycles intermédiaires, le dioxyde de carbone est maintenu à une pression d'au moins 60 bars (= p (critique) CO₂ à la température ambiante).

18. Procédé selon l'une quelconque des revendications précédentes, **caractérisé en ce que**, pour la phase d'injection de fluide moteur, le fluide moteur est amené par l'intermédiaire de la vanne de régulation de pression (10) à une pression au-dessus de 60 bars.

19. Procédé selon l'une quelconque des revendications précédentes, **caractérisé en ce qu'**une contre-pression est produite dans la cavité (1).

20. Procédé selon l'une quelconque des revendications précédentes, **caractérisé en ce que** l'article moulé par injection sur la base d'un moussage physique est choisi pour être une poignée, un bouton, un bouton de levier de vitesse, un entourage de volant, une balle, une bille, un bourrelet, un flotteur et un bouchon pour des récipients en forme de bouteilles.

21. Dispositif pour le dosage avec une régulation de la pression de fluides moteurs physiques dans une masse en fusion pouvant être transformée en mousse afin de mettre en oeuvre un procédé selon l'une quelconque des revendications 1 à 20, dans lequel le dispositif comprend un accumulateur (11) dans lequel le fluide moteur est accumulé sous pression ainsi qu'une vanne de régulation de pression (10) pour la régulation de la pression du fluide moteur et un point d'injection (5) qui est configuré comme élément d'étranglement et au moyen duquel le fluide moteur sous pression est amené à la masse en fusion et dans lequel est prévue devant le point d'injection (5) une vanne de détente de limitation de pression (4) et/ou le point d'injection (5) est conçu comme mécanisme de fermeture régulé.
